**Europäisches Patentamt**

**European Patent Office**

**Office européen des brevets**

(19)

(11) Numéro de publication : **0 435 711 B1**

(12) # FASCICULE DE BREVET EUROPEEN

(45) Date de publication du fascicule du brevet :
**04.05.94 Bulletin 94/18**

(21) Numéro de dépôt : **90403384.2**

(22) Date de dépôt : **29.11.90**

(51) Int. Cl.⁵ : **G05D 7/01**

(54) Dispositif pour le contrôle du courant gazeux délivré par un réservoir de gaz sous pression, et système d'alimentation en gaz comportant un tel dispositif.

---

(30) Priorité : **27.12.89 FR 8917265**

(43) Date de publication de la demande :
**03.07.91 Bulletin 91/27**

(45) Mention de la délivrance du brevet :
**04.05.94 Bulletin 94/18**

(84) Etats contractants désignés :
**BE CH DE ES GB IT LI NL**

(56) Documents cités :
**FR-A- 868 263**
**GB-A- 760 055**
**US-A- 3 556 135**
**US-A- 3 910 553**

(73) Titulaire : **AEROSPATIALE SOCIETE NATIONALE INDUSTRIELLE Société Anonyme dite:**
**37, Boulevard de Montmorency**
**F-75016 Paris (FR)**

(72) Inventeur : **Valy, Yves Hervé Guillaume**
**41, rue Edouard Branly, Les Artigons - Issac**
**F-33260 St. Medard en Jalles (FR)**
Inventeur : **Coquet, Pascal Didier**
**Appartement 125, 32, rue Berthelot**
**F-33200 Bordeaux (FR)**
Inventeur : **Amagat, Michel**
**16, Allée des Heliotropes**
**F-33160 St. Aubin du Medoc (FR)**

(74) Mandataire : **Bonnetat, Christian**
**CABINET BONNETAT 23, Rue de St.Pétersbourg**
**F-75008 Paris (FR)**

## Description

La présente invention concerne un dispositif pour le contrôle du courant gazeux délivré par un réservoir de gaz sous pression, la pression du gaz à l'intérieur dudit réservoir pouvant atteindre plusieurs centaines de bars. Elle concerne également un système d'alimentation en gaz comportant un tel dispositif.

Un sysème de ce genre est connu du document FR-A-868 263

Quoique non exclusivement, la présente invention est particulièrement adaptée à être mise en oeuvre dans des réservoirs composites de type connu, constitués d'une chemise interne et d'une coque externe d'enroulements filamentaires enrobés de résine synthétique. On sait que dans ces réservoirs composites la chemise interne assure l'étanchéité gazeuse, tandis que la coque d'enroulements filamentaires a pour objet d'assurer la résistance mécanique. De plus, on fait généralement en sorte que la déformation de la chemise interne sous l'effet de la pression interne soit du type plastique, alors que la déformation de la coque externe est élastique. Ainsi, il est possible d'obtenir pour le réservoir une déformation élastique linéaire en fonction de la pression.

A cause de leur excellente résistance mécanique et de leur faible masse, ces réservoirs composites sont largement utilisés dans la technique spatiale pour le stockage de gaz sous haute pression (jusqu'à 800 bars). Par exemple, ils contiennent de l'oxygène, de l'hydrogène, de l'hélium ou de l'azote pour assurer les servitudes d'un engin spatial habité, ou bien encore ils stockent les gaz permettant la pressurisation des ergols de propulsion des lanceurs ou satellites.

Bien entendu, pour pouvoir utiliser le gaz stocké dans un tel réservoir, il est nécessaire de contrôler le courant gazeux à la sortie dudit réservoir. A cet effet, on prévoit une succession de détendeurs commandés, dont l'ouverture est asservie à l'évolution de la pression dans le réservoir. Compte-tenu des pressions élevées à l'intérieur du réservoir et des exigences de sécurité et de fiabilité dans le domaine des hautes pressions, de tels détendeurs et leurs commandes sont lourds (de l'ordre de 25 kg), ce qui est fortement pénalisant dans le domaine spatial.

Pour éviter les inconvénients dus à l'usage de tels détendeurs, on pourrait envisager de remplacer ceux-ci par un système d'orifice à section de passage variable, commandé par une électronique d'asservissement en fonction de la pression interne au réservoir, mesurée par un capteur de pression approprié. On pourrait donc réduire le poids total du réservoir et de ses accessoires de fonctionnement. Cependant, il en résulterait une réalisation sophistiquée coûteuse, à fonctionnement relativement critique.

Aussi, l'objet de la présente invention est-il de remédier à ces inconvénients et de prévoir un réservoir de gaz sous pression, avec contrôle du courant gazeux délivré, permettant, à la fois, d'éviter l'usage des détendeurs précités et d'obtenir une réalisation simple, à fonctionnement sûr.

A cette fin, selon l'invention, le dispositif pour le contrôle, en association avec une vanne d'arrêt, du courant gazeux délivré par un réservoir de gaz sous pression, dont l'enveloppe est pourvue d'une ouverture grâce à laquelle l'intérieur dudit réservoir peut être relié à l'extérieur, est remarquable en ce qu'il comporte :

- un cylindre partagé en une première et une seconde chambre par un piston, ladite première chambre étant en communication avec ladite ouverture de ladite enveloppe et comportant un orifice susceptible d'être mis en liaison avec ladite vanne d'arrêt ;
- un noyau, solidaire dudit piston du côté de celui-ci tourné vers ladite première chambre, ledit noyau coopérant avec ledit orifice pour former une section de passage variable en fonction de la position dudit piston dans ledit cylindre ;
- un passage pourvu d'un clapet anti-retour, susceptible d'établir une communication entre lesdites première et seconde chambres dudit cylindre, et
- des moyens de verrouillage commandables, susceptibles de verrouiller ledit piston en position dans ledit cylindre.

Ainsi, ledit réservoir étant vide de gaz et ledit piston étant verrouillé en position par lesdits moyens de verrouillage, il est possible de relier ledit réservoir à un générateur de gaz pour le remplir. Au cours du remplissage, ladite seconde chambre du cylindre se remplit de gaz sous pression à travers ledit passage pourvu du clapet anti-retour. Lorsque le réservoir est rempli, le gaz qu'il contient peut servir à l'alimentation en gaz d'un dispositif utilisateur. Les moyens de verrouillage sont à cet effet commandés au déverrouillage, de sorte que, sous l'action du gaz emmagasiné dans ladite seconde chambre du cylindre, le piston se déplace en faisant varier la section de passage et donc en contrôlant le courant gazeux délivré par le réservoir au dispositif utilisateur.

De préférence, ledit passage pourvu d'un clapet anti-retour est établi à travers ledit piston.

Avantageusement, le dispositif comporte des moyens élastiques auxiliaires pour presser ledit piston de ladite seconde chambre vers ladite première chambre.

Ainsi, le système d'alimentation en gaz sous pression conforme à la présente invention comporte, en combinaison :

- un réservoir de gaz sous pression ;
- une vanne d'arrêt pour le courant gazeux délivré par ledit réservoir ; et
- un dispositif de contrôle de courant gazeux, du type spécifié ci-dessus, disposé entre ledit réservoir et ladite vanne d'arrêt.

Lorsqu'il est souhaitable de réaliser un système compact, ledit dispositif de contrôle de courant gazeux est monté sur ledit réservoir. En revanche, lorsque des impératifs d'encombrement l' exigent, ledit dispositif de contrôle de courant gazeux est disposé à distance dudit réservoir.

De préférence, l'enveloppe dudit réservoir présente une forme de révolution. Cette enveloppe peut être constituée d'une chemise interne et d'une coque externe filamentaire. Il est avantageux que ladite chemise interne soit plastiquement déformable et mise sous précontrainte par ladite coque externe filamentaire.

Les figures du dessin annexé feront bien comprendre comment l'invention peut être réalisée. Sur ces figures, des références identiques désignent des éléments semblables.

Les figures 1a et 1b illustrent de façon schématique, respectivement le remplissage d'un réservoir équipé du dispositif conforme à l'invention et une application possible dudit réservoir.

La figure 2 montre, en coupe axiale à plus grande échelle, une forme de réalisation du dispositif de contrôle conforme à la présente invention, le réservoir associé n'étant représenté que de façon partielle et le dispositif de contrôle se trouvant dans une position correspondant à l'état avant remplissage, à l'état pendant le remplissage, ou bien encore à l'état rempli en attente d'utilisation, dudit réservoir.

La figure 3 est une vue en coupe axiale semblable à celle de la figure 2, ledit dispositif de contrôle se trouvant dans sa position correspondant à la fin du vidage dudit réservoir.

La figure 4 est une vue analogue à la figure 2, illustrant une particularité supplémentaire dudit dispositif de contrôle conforme à l'invention.

Les figures 5a, 5b, 6a et 6b sont des diagrammes illustrant des essais réalisés avec le dispositif selon l'invention.

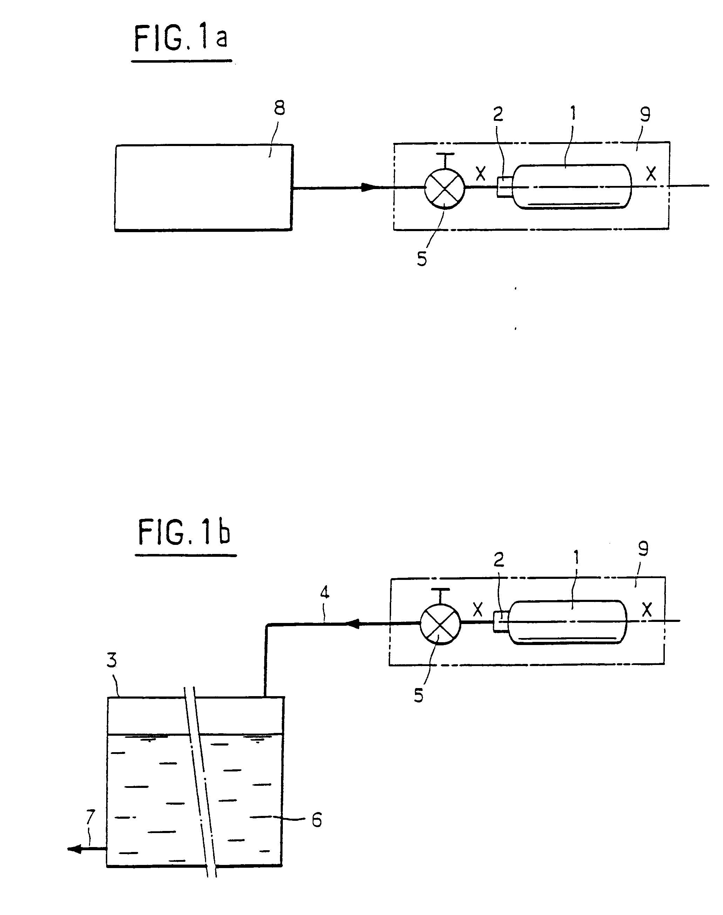

Sur les figures 1a et 1b, on a représenté un réservoir de gaz sous pression 1 équipé d'un dispositif de contrôle de débit 2 conforme à l'invention, ledit réservoir étant destiné à alimenter en gaz une enceinte 3, par l'intermédiaire d'une liaison 4 et d'une vanne d'arrêt 5. L'enceinte 3, qui a un volume important, contient un liquide 6, destiné à être chassé hors de l'enceinte 3, à travers une sortie 7, sous la pression du gaz préalablement stocké dans ledit réservoir 1.

Comme l'illustre schématiquement la figure 1a, le réservoir 1 est empli de gaz sous pression grâce à un générateur de gaz 8 (compresseur, bouteille de gaz sous pression, etc...), qui lui transmet ledit gaz à travers ladite vanne 5 et ledit dispositif de contrôle de débit 2, l'ensemble du réservoir 1, du dispositif 2 et de la vanne 5 formant un système unitaire de stockage et d'alimentation 9. Bien entendu, pendant le remplissage du réservoir 1 en gaz, la vanne d'arrêt 5 (qui se trouve alors en amont du dispositif 2 pour le sens de circulation du gaz de remplissage) est ouverte pour permettre le transfert de gaz à partir du générateur 8 vers le réservoir 1. Lorsque le remplissage est terminé à la pression désirée dans ledit réservoir 1, la vanne 5 est fermée et le système 9 est débranché du générateur de gaz 8 pour être monté sur la liaison 4 (figure 1b). L'ouverture de la vanne 5 permet alors d'alimenter l'enceinte 3. Lors de l'alimentation de ladite enceinte 3 en gaz à partir du réservoir 1, la vanne d'arrêt 5 se trouve en aval du dispositif 2 pour le sens de circulation du gaz d'alimentation.

De la façon qui sera décrite ci-après, le dispositif 2 permet de contrôler le courant gazeux dans la liaison 4, lorsque la vanne d'arrêt 5 est ouverte.

Pour des raisons d'encombrement et de poids, le volume du réservoir 1 doit être aussi petit que possible; par suite, la pression initiale du gaz dans celui-ci doit être élevée pour assurer au liquide 6 une pressurisation supérieure à un seuil déterminé (par exemple 10 bars), même lorsqu'il ne reste que peu de liquide 6 dans l'enceinte 3.

Sur les figures 1a et 1b, le réservoir 1 est représenté sous la forme d'une bouteille cylindrique d'axe X-X, dont les extrémités sont des dômes, par exemple hémisphériques.

Bien entendu, le réservoir 1 pourrait présenter toute autre forme appropriée, par exemple sphérique.

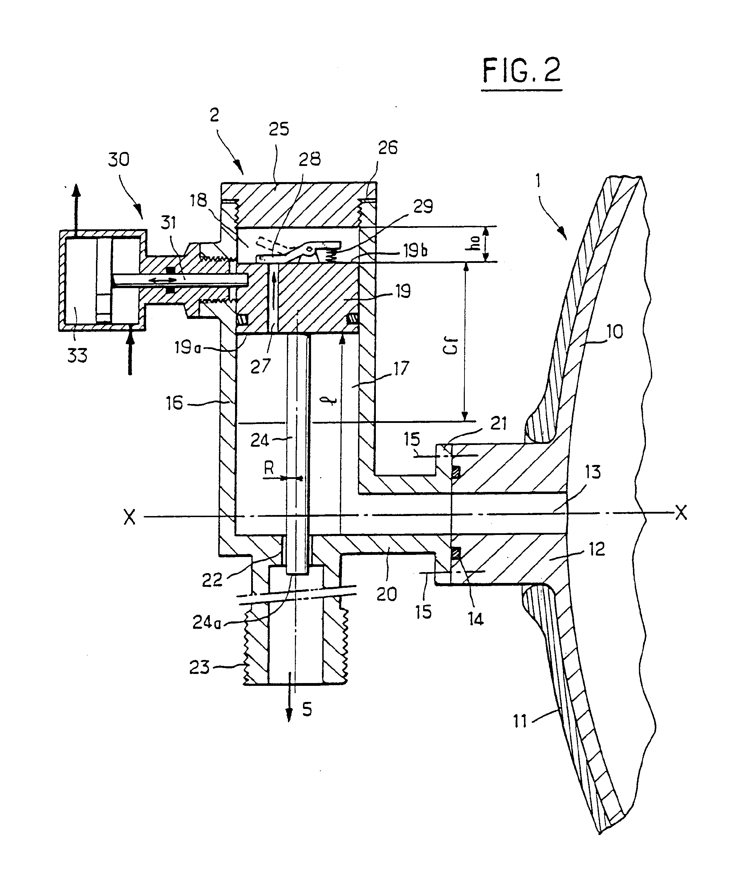

Le réservoir 1, montré schématiquement et partiellement sur les figures 2 à 4 à titre d'exemple, est tel que son enveloppe comporte une chemise interne 10, réalisée en un métal tel que par exemple l'aluminium ou le titane, supportant une coque 11 constituée d'enroulements filamentaires composés de fibres résistantes (verre, carbone, kevlar (marque déposée), etc...) enrobées de résine polymérisée.

La chemise interne métallique 10 est pourvue, en regard du dispositif 2, d'un embout 12 délimitant une ouverture 13.

Le réservoir 1 peut avantageusement avoir subi une opération préparatoire de mise en pression (l'embout 12 servant à l'introduction d'un fluide sous pression) telle que la limite de déformation élastique de la chemise métallique interne 10 soit dépassée, sans que ce soit le cas pour la coque 11, dont la limite de déformation élastique est beaucoup plus élevée. Ainsi, la déformation par dilatation de la chemise métallique interne 10 passe dans le domaine plastique et, lors du retour à la pression atmosphérique du réservoir 1, ladite chemise métallique interne 10 est en état de précontrainte par l'action élastique de la coque 11. Il en résulte de plus que, lorsque le réservoir 1 est soumis à une mise en pression ultérieure supérieure à celle de ladite opération préparatoire, la déformation du réservoir 1 devient proportionnelle à la pression appliquée.

Comme cela est représenté par les figures 2 à 4, le dispositif de contrôle 2 est fixé sur l'embout 12 de façon étanche, grâce à un joint 14 et à des moyens de fixation 15 (seulement représentés par la ligne de leur axe).

Le dispositif de contrôle 2 comporte un cylindre 16, partagé en deux chambres 17 et 18 par un piston 19. La chambre 17 est en communication avec l'ouverture 13 de l'enveloppe (10, 11) par un conduit 20, se terminant par exemple par une bride 21, pour servir à la fixation dudit dispositif 2 sur l'embout 12 grâce aux moyens de fixation 15 précités. Par ailleurs, ladite chambre 17 comporte un orifice 22 la faisant communiquer avec un raccord 23, solidaire du cylindre 16 et susceptible de permettre la fixation de la vanne d'arrêt 5 (non représentée sur les figures 2 à 4).

Un noyau allongé 24 est porté par la face 19a du piston 19 dirigée vers la chambre 17 et est engagé dans l'orifice 22. L'orifice 22 et le noyau 24 sont destinés, grâce à leur coopération, à former entre eux un passage à section variable en fonction de la position du piston 19 dans le cylindre 16. Il va de soi que leurs sections respectives, et/ou les variations de leurs sections respectives le long de leurs axes, sont choisies de façon à obtenir, pour chaque position successive du piston 19 dans le cylindre 16, la section de passage correspondant au débit désiré. Toutefois, à des fins de simplification, sur les figures 2 à 4, l'orifice 22 a été représenté sous la forme d'un simple trou cylindrique calibré, tandis que le noyau 24 est montré comme étant une tige à section conique, de plus petit diamètre du côté du piston 19 qu'à son extrémité libre 24a.

Du côté opposé au piston 19, la chambre 18 est obturée de façon étanche par un bouchon vissable 25, avec interposition d'un joint 26.

Un passage 27 est ménagé à travers le piston 19, pour relier les faces opposées 19a et 19b de celui-ci. Un clapet 28, chargé par un ressort 29, est agencé sur la face 19b du piston 19, tournée vers la chambre 18, pour obturer ledit passage 27.

Par ailleurs, le dispositif 2 comporte des moyens de verrouillage 30, susceptibles de bloquer le piston 19, dans une position telle que ledit piston est éloigné de l'orifice 22. Dans cette position verrouillée du piston 19, la chambre 18 peut être relativement petite (par rapport à la chambre 17) et l'extrémité libre 24a du noyau 24 est déjà engagée dans l'orifice 22.

Les moyens de verrouillage 30 comportent une goupille rétractable 31 pénétrant dans un évidement 32 correspondant du piston 19 et actionnée par des moyens moteurs 33. Sur les figures 2 à 4, lesdits moyens moteurs 33 ont été schématisés sous la forme d'un vérin, mais il va de soi qu'ils pourraient être réalisés de façon différente, comme par exemple sous la forme d'un électroaimant.

Le dispositif de contrôle 2 étant dans sa position montrée par la figure 2 (le piston 19 étant verrouillé en position éloignée de l'orifice 22) et étant relié au réservoir 1 et à la vanne d'arrêt 5 pour former le système 9, ledit système est branché sur le générateur de gaz 8. Dès que la vanne d'arrêt 5 est ouverte, du gaz en provenance dudit générateur 8 pénètre dans la chambre de cylindre 17, à travers ladite vanne 5, le raccord 23 et l'espace annulaire délimité entre le noyau 24 et l'orifice 22, puis dans le réservoir 1, à travers l'ouverture 13. Dès que la pression dans la chambre 17 est supérieure à l'action du ressort 29, le clapet 28 se lève (voir position en pointillés sur la figure 2) et du gaz passe dans la chambre 18, à travers le passage 27. Lorsque la pression de gaz à l'intérieur du réservoir 1 atteint une valeur désirée, la vanne d'arrêt 5 est fermée, isolant le générateur 8 dudit réservoir. A ce moment, l'équilibre des pressions dans les chambres 17 et 18 est réalisé, et le clapet 28 se referme sous l'action du ressort 29, obturant de nouveau ledit passage 27.

Ainsi, en position de stockage de gaz, le réservoir 1, la chambre 17 et la chambre 18 sont à la même pression gazeuse (exception faite de l'action du ressort 29 du clapet 28).

Si, maintenant, l'unité 9 est débranchée du générateur 8, pour être branchée sur la liaison 4 à l'enceinte 3, rien ne se passe tant que la vanne d'arrêt 5 est fermée.

En revanche, lorsque, simultanément, on ouvre la vanne d'arrêt 5 et on rétracte la goupille 31, il se produit deux actions: d'une part, du gaz stocké dans le réservoir 1 passe à travers l'espace annulaire délimité entre le noyau 24 et l'orifice 22 en direction de l'enceinte 3 faisant baisser la pression dans le réservoir 1 et la chambre 17, d'autre part, le piston 29 est poussé par le gaz sous pression contenu dans la chambre 18 (le clapet 28 restant fermé). Il en résulte non seulement que l'enceinte 3 est alimentée en gaz, mais encore que le noyau 24 se déplace par rapport à l'orifice 22, c'est-à-dire que la section de passage du gaz à travers ledit orifice 22 varie en fonction de la course dudit piston.

On voit donc qu'en choisissant de façon appropriée les profils de l'orifice 22 et du noyau 24, il est possible de contrôler à toute valeur instantanée désirée le débit du courant gazeux entre le réservoir 1 et l'enceinte 3, au cours du déplacement dudit piston 19.

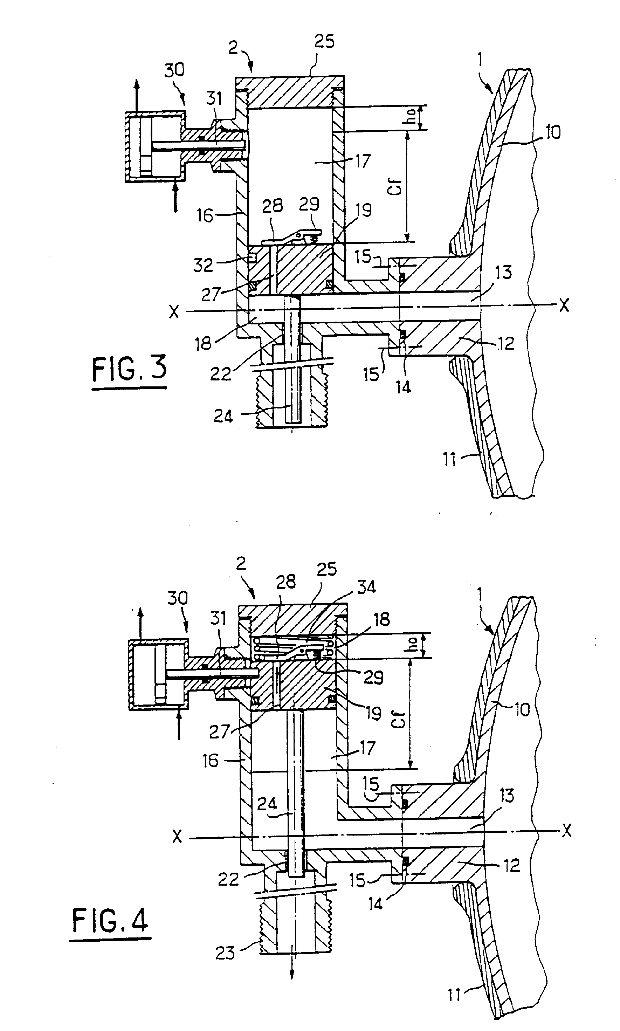

En fin de course du piston 19 (voir la figure 3), on retrouve l'équilibre de pression entre les chambres 17, 18 et le réservoir 1.

Si la détente du gaz emprisonné dans la chambre 18 (qui produit le déplacement du piston 19) se fait à enthalpie constante, on peut écrire :

$$(1) \qquad V(t) = \frac{(Po)^{\frac{1}{\gamma}}}{P(t)}Vo,$$

expression dans laquelle
V(t) est le volume de la chambre 18 à un instant $\underline{t}$ de la détente,
P(t) est la pression gazeuse à l'intérieur de la chambre 18 audit instant $\underline{t}$,
Vo est le volume initial de la chambre 18 (figure 2),
Po est la pression gazeuse initiale à l'intérieur de la chambre 18, cette pression Po étant pratiquement égale (à l'action du ressort 29 près) à la pression de stockage du gaz dans le réservoir 1, et γ est la constante des gaz parfait du gaz considéré.

Puisque, par structure, la section interne du cylindre 16 est constante, on peut écrire:

$$(2) \qquad \frac{Vo}{V(t)} = \frac{ho}{C(t)}$$

expression dans laquelle:
ho est la hauteur initiale de la chambre 18 (figure 2) et C(t) est la course parcourue par le piston 19 à l'instant t.

On voit donc ainsi que la course C(t) est fonction des pressions Po et P(t).

Si, à la fin de la détente du gaz de la chambre 18 l'équilibre du piston 19 est obtenu pour une pression résiduelle Pf, on peut écrire:

$$(3) \qquad \frac{Cf}{ho} = \frac{(Po)}{Pf}^{\frac{1}{\gamma}}$$

Cf étant la course totale du piston 19. Ainsi, cette course est facilement déterminée à partir de ho, Po et Pf.

Comme le montre la figure 4, il peut être avantageux de prévoir, dans la chambre 18, un ressort de compression 34, prenant par exemple appui sur le bouchon 25 et sur la face 19a du piston 19. Ainsi, on remédie aux inconvénients qui seraient dus à une liquéfaction éventuelle du gaz contenu dans la chambre 18, pendant sa détente.

A l'aide du dispositif des figures 2 et 3, on a réalisé des essais avec de l'azote et de l'hélium.

1) Sur les diagrammes 5a et 5b, sont résumés les résultats des essais avec l'azote, avec une pression initiale Po égale à 320 bars, une pression finale Pf égale à 10 bars et une hauteur initiale ho égale à 10 mm. Dans ce cas, le rayon de l'orifice 22 a été choisi égal à 8 mm. Le diagramme 5a donne l'évolution du rayon R du noyau 24 (en mm) en fonction de sa longueur I (également en mm), comptée à partir de l'orifice 22 en direction du piston 19 (voir la figure 2). Le diagramme 5b donne le débit de gaz d (en gramme par seconde) à travers le raccord 23 en fonction du temps t en seconde :

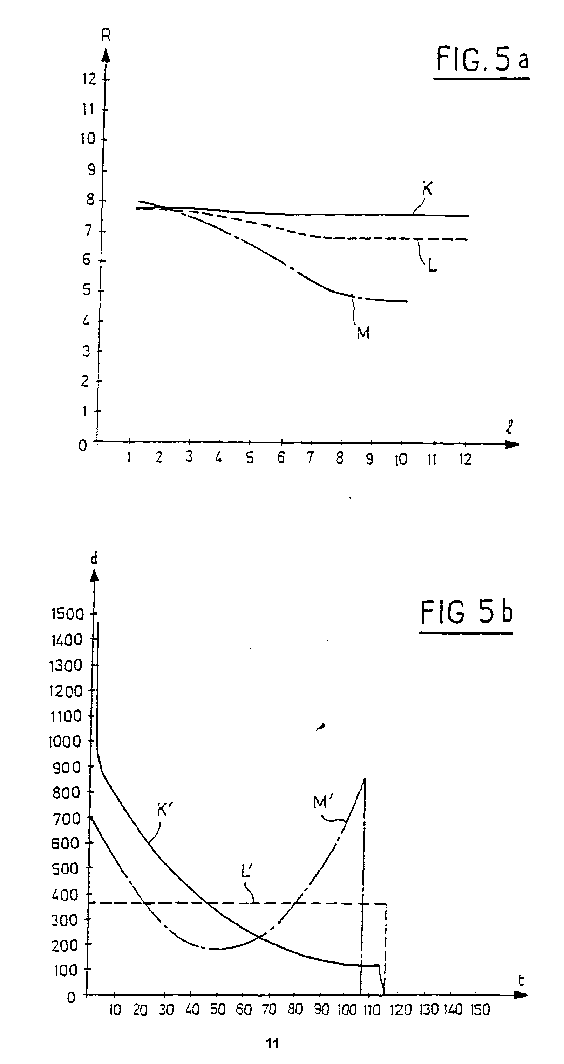

- si le rayon R suit la variation donnée par la courbe K de la figure 5a, le débit d suit la courbe K' de la figure 5b, correspondant à un débit à volume constant ;
- si le rayon R suit la variation donnée par la courbe L de la figure 5a, le débit d suit la courbe L' de la figure 5b, correspondant à un débit à masse constante ; et
- si le rayon R suit la variation donnée par la courbe M de la figure 5a, le débit d suit la courbe parabolique M' de la figure 5b.

2) Les diagrammes 6a et 6b résument les résultats des essais avec l'hélium, les grandeurs Po, Pf et ho ayant les mêmes valeurs que ci-dessus, mais l'orifice 22 ayant alors un rayon de 4 mm.

Les références R, I, d et t ont les mêmes significations qu'à propos des figures 5a et 5b. On peut voir que :

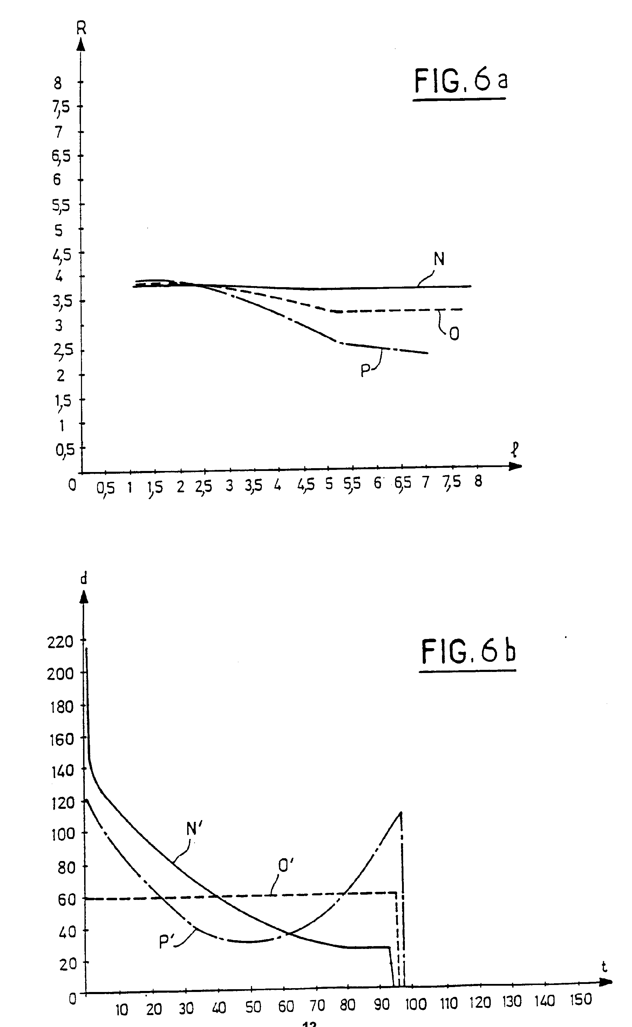

- si le rayon R du noyau 24 suit la variation donnée par la courbe N de la figure 6a, le débit d suit la courbe N' de la figure 6b, correspondant à un débit à volume constant ;
- si le rayon R suit la variation donnée par la courbe O de la figure 6a, le débit d suit la courbe O', de la figure 6b, correspondant à un débit à masse constante ; et
- si le rayon R suit la variation donnée par la courbe P de la figure 6a, le débit d suit la courbe parabolique P' de la figure 6b.

Les essais effectués, illustrés par les figures 5a, 5b, 6a et 6b, montrent donc l' extrême souplesse du dispositif conforme à l'invention en ce qui concerne le contrôle du débit gazeux à la sortie du réservoir 1.

**Revendications**

1. Dispositif (2) pour le contrôle, en association avec une vanne d'arrêt (5), du courant gazeux délivré par un réservoir (1) de gaz sous pression, dont l'enveloppe (10, 11) est pourvue d'une ouverture (13) grâce à laquelle l'intérieur dudit réservoir (1) peut être relié à l'extérieur,
caractérisé en ce qu'il comporte :
   - un cylindre (16) partagé en une première et une seconde chambre (17, 18) par un piston (19), ladite première chambre (17) étant en communication avec ladite ouverture (13) de ladite enveloppe (10, 11) et comportant un orifice (22) susceptible d'être mis en liaison avec ladite vanne d'arrêt (5) ;
   - un noyau (24), solidaire dudit piston du côté de celui-ci tourné vers ladite première chambre, ledit noyau (24) coopérant avec ledit orifice (22) pour former une section de passage variable en fonction de la position dudit piston dans ledit cylindre (16) ;
   - un passage (27) pourvu d'un clapet anti-retour (28), susceptible d'établir une communication entre lesdites première et seconde chambres (17, 18) dudit cylindre (16) ; et
   - des moyens de verrouillage commandables (30), susceptible de verrouiller ledit piston en position dans ledit cylindre (16).

2. Dispositif selon la revendication 1, caractérisé en ce que ledit passage (27) pourvu d'un clapet anti-retour (28) est établi à travers ledit piston (19).

3. Dispositif selon l'une des revendications 1 ou 2, caractérisé en ce qu'il comporte des moyens élastiques auxiliaires (34) pour presser ledit piston (19) de ladite seconde chambre (18) vers ladite première chambre (17).

4. Système (9) d'alimentation en gaz sous pression, caractérisé en ce qu'il comporte, en combinaison :
   - un réservoir (1) de gaz sous pression ;
   - une vanne d'arrêt (5) pour le courant gazeux délivré par ledit réservoir (1) ; et
   - un dispositif (2) de contrôle de courant gazeux, du type spécifié sous l'une quelconque des revendications 1 à 3, disposé entre ledit réservoir (1) et ladite vanne d'arrêt (5).

5. Système selon la revendication 4, caractérisé en ce que ledit dispositif (2) de contrôle de courant gazeux est monté sur ledit réservoir (1).

6. Système selon la revendication 4, caractérisé en ce que ledit dispositif (2) de contrôle de courant gazeux est disposé à distance dudit réservoir (1).

7. Système selon l'une des revendications 4 à 6, caractérisé en ce que l'enveloppe (10, 11) dudit réservoir (1) présente une forme de révolution.

8. Système selon l'une des revendications 4 à 7, caractérisé en ce que ledit réservoir comporte une enveloppe constituée d'une chemise interne (10) et d'une coque externe filamentaire (11).

9. Système selon la revendication 8, caractérisé en ce que ladite chemise interne (10) est plastiquement déformable et mise sous précontrainte par ladite coque externe filamentaire (11).

**Patentansprüche**

1. Vorrichtung (2) - unter Hinzufügung eines Absperrventils (5) - zur Steuerung eines Gasstroms aus einem Behälter (1) mit Gas unter Druck, dessen Verkleidung (10, 11) mit einer Öffnung (13) versehen ist, durch die das Innere des Behälters (1) mit dem Äußeren verbunden wird, dadurch gekennzeichnet,
   - daß sie einen Zylinder (16) enthält, der durch einen Kolben (19) in eine erste und eine zweite Kammer (17, 18) unterteilt ist, wobei die erste Kammer (17) mit der Öffnung (13) in der Verkleidung (10, 11) verbunden ist und einen Ausgang (22) aufweist, der mit dem genannten Absperrventil (5) verbunden werden kann;
   - daß sie einen Kern (24) enthält, der mit dem Kolben auf der zur ersten Kammer hin gerichteten Seite verbunden ist, wobei der Kern (24) mit dem Ausgang (22) zusammenwirkt, um einen variablen Durchlaßbereich je nach Stellung des Kolbens in dem Zylinder (16) zu bilden;
   - daß sie einen mit einem Rückschlagventil (28) versehenen Durchlaß (27) aufweist, der zwischen der ersten und zweiten Kammer (17, 18) des Zylinders (16) eine Verbindung herstellen kann;
   - daß sie eine steuerbare Blockierungsvorrichtung (30) enthält, durch die der Kolben in einer bestimmten Stellung in dem Zylinder (16) blockiert werden kann.

2. Vorrichtung nach Anspruch 1 dadurch gekennzeichnet, daß der mit einem Rückschlagventil (28) versehene Durchlaß (27) durch den Kolben (19) führt.

3. Vorrichtung nach einem der Ansprüche 1 oder 2 dadurch gekennzeichnet, daß sie eine elastische Hilfsvorrichtung (34) enthält, um den Kolben (19) aus der zweiten Kammer (18) in Richtung der ersten Kammer (17) zu drücken.

4. System (9) für die Zufuhr von Gas unter Druck dadurch gekennzeichnet, daß es besteht aus
   - einem Behälter (1) für Gas unter Druck,
   - einem Absperrventil (5) für den von dem Behälter (1) abgegebenen Gasstrom und
   - einer Vorrichtung (2) zur Kontrolle des Gasstroms. wie in einem der Ansprüche 1 bis 3 näher beschrieben. die zwischen dem Behälter (1) und dem Absperrventil (5) angebracht ist.

5. System nach Anspruch 4 dadurch gekennzeichnet, daß die Vorrichtung (2) zur Kontrolle des Gasstroms an dem Behälter (1) angebracht ist.

6. System nach Anspruch 4 dadurch gekennzeichnet, daß sich die Vorrichtung (2) zur Kontrolle des Gasstroms an einer von dem Behälter (1) entfernt gelegenen Stelle befinden kann.

7. System nach einem der Ansprüche 4 bis 6 dadurch gekennzeichnet, daß die Verkleidung (10, 11) des Behälters (1) eine Umlaufsform aufweist.

8. System nach einem der Ansprüche 4 bis 7 dadurch gekennzeichnet, daß der Behälter eine Verkleidung aus einem Innenmantel (10) und einer Außenschale (11) mit Präzisionswicklung aufweist.

9. System nach Anspruch 8
dadurch gekennzeichnet, daß der Innenmantel (10) plastisch formbar ist und durch die Außenschale (11) einer Vorspannung unterliegt.

**Claims**

1. Device (2) for controlling, in combination with a stop valve (5), the flow of gas delivered by a pressurized-gas tank (1), whose casing (10, 11) is provided with an opening (13) by means of which the inside of the said tank (1) can be connected to the outside,
characterized in that it comprises:
   - a cylinder (16) divided into a first and a second chamber (17, 18) by a piston (19), the said first chamber (17) being in communication with the said opening (13) of the said casing (10, 11) and comprising an orifice (22) capable of being connected with the said stop valve (5);
   - a core (24), integral with the said piston on the side of the latter turned towards the said first chamber, the said core (24) interacting with the said orifice (22) to form a passage cross section which can be varied as a function of the position of the said piston in the said cylinder (16);
   - a passage (27) provided with a non-return valve (28), capable of establishing communication between the said first and second chambers (17, 18) of the said cylinder (16); and
   - controllable locking means (30), capable of locking the said piston in position in the said cylinder (16).

2. Device according to Claim 1, characterized in that the said passage (27) provided with a non-return valve (28) is established through the said piston (19).

3. Device according to either of Claims 1 or 2, characterized in that it comprises auxiliary elastic means (34) for pressing the said piston (19) from the said second chamber (18) towards the said first chamber (17).

4. Pressurized-gas supply system (9), characterized in that it comprises, in combination:
   - a pressurized-gas tank (1);
   - a stop valve (5) for the gas flow delivered by the said tank (1); and
   - a device (2) for controlling the gas flow, of the type specified in any one of Claims 1 to 3, arranged between the said tank (1) and the said stop valve (5).

5. System according to Claim 4, characterized in that the said device (2) for controlling the gas flow is mounted on the said tank (1).

6. System according to Claim 4, characterized in that the said device (2) for controlling the gas flow is arranged at a distance from the said tank (1).

7. Device according to one of Claims 4 to 6, characterized in that the casing (10, 11) of the said tank (1) is a body of revolution.

8. Device according to one of Claims 4 to 7, characterized in that the said tank comprises a casing consisting of an inner lining (10) and an outer fibrous shell (11).

9. System according to Claim 8, characterized in that the said inner lining (10) is plastically deformable and prestressed by the said outer fibrous shell (11).

# FIG.1a

# FIG.1b

# FIG. 2

FIG.3

FIG.4

FIG. 5 a

FIG 5 b

FIG. 6 a

FIG. 6 b